Europäisches Patentamt

European Patent Office

Office européen des brevets

(11) Publication number : **0 488 780 A2**

# EUROPEAN PATENT APPLICATION

(21) Application number : **91311110.0**

(22) Date of filing : **29.11.91**

(51) Int. Cl.$^5$ : **G06F 3/06,** G06K 19/077, G06K 7/01

(30) Priority : **30.11.90 JP 340519/90**

(43) Date of publication of application :
**03.06.92 Bulletin 92/23**

(84) Designated Contracting States :
**DE FR**

(71) Applicant : **Kabushiki Kaisha Toshiba
72, Horikawa-cho Saiwai-ku
Kawasaki-shi (JP)**
(71) Applicant : **TOSHIBA INTELLIGENT
TECHNOLOGY LTD.
70, Yanagi-cho Saiwai-ku
Kawasaki-shi Kanagawa-ken (JP)**

(72) Inventor : **Niimura, Takashi, c/o Intellectual
Property Div.
Toshiba Corporation, 1-1-1, Shibaura
Minato-ku, Tokyo (JP)**

(74) Representative : **Shindler, Nigel
BATCHELLOR, KIRK & CO. 2 Pear Tree Court
Farringdon Road
London EC1R 0DS (GB)**

(54) **Portable storage device.**

(57) A portable data storage device having a data memory for storing external information ; control memory means for storing initialisation information which indicates addresses of multiple sectors of the data memory and which is stored during the production process of the portable storage device ; and a CPU for writing the external information into the data memory means according to the initialisation information.

Fig.3.

EP 0 488 780 A2

The present invention relates to a portable data storage device such as an IC card which incorporates a CPU and a data memory.

Storage devices for writing in and reading out external information, for instance EPROMs or EEPROMs are commonly provided in portable electronic systems, such as an IC card which typically incorporates a CPU and an EEPROM.

The memory of the IC card is usually allocated in multiple sectors.

In one type of known device, an initialisation process has been necessary in order to record information which indicates the memory addresses of the multiple sectors before use of the IC card by a IC card issuer. If this initialisation process is not carried out, it is not possible, for instance, to write information from a host system into the EEPROM of the IC card.

Therefore, in such known devices, the IC card is not usable immediately after production, because the initialisation process must be carried out.

The present invention seeks to provide an IC card in which information can be written from an external device into the data memory immediately after production, without the need for any initialisation process.

Accordingly the present invention provides a portable data storage device comprising:

data memory means for storing external information;

memory control means for storing initialisation information indicating addresses of multiple sectors of the data memory which are stored during the production process of the portable data storage device;

control means for writing the external information into the data memory means in accordance with the initialisation information.

Some embodiments of the invention will now be described with reference to the accompanying drawings in which:

Figure 1 is a schematic diagram of an IC card;

Figure 2 illustrates the structure of a data memory;

Figure 3 illustrates the structure of a control memory; and

Figure 4 illustrates the arrangement of an alternative control memory.

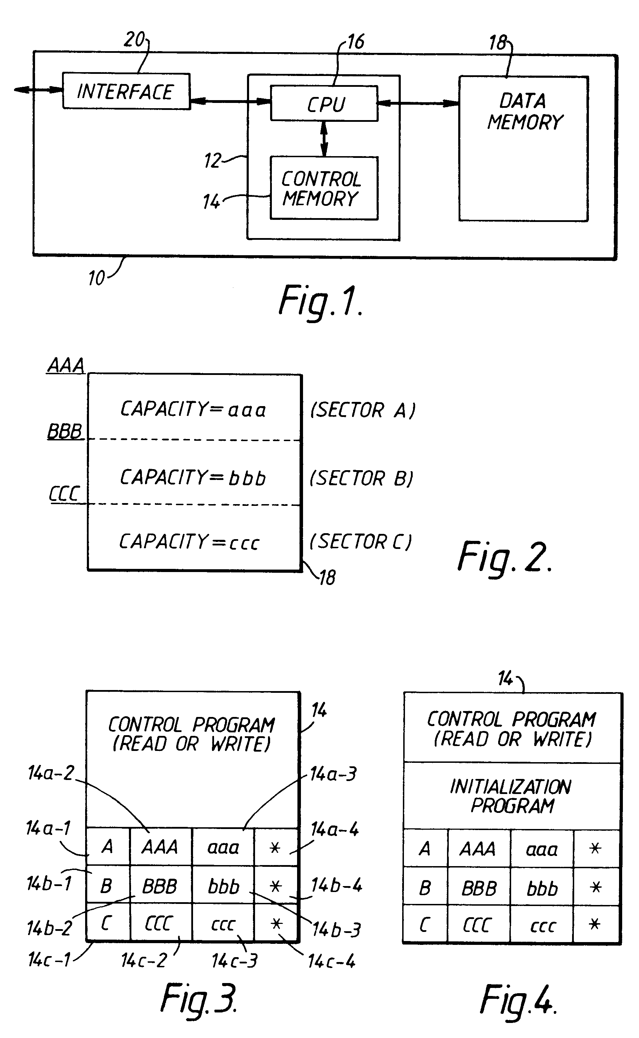

Referring to Figure 1 IC card 10 contains control unit 12 which has memory 14 and CPU 16. The control unit 12 is connected to data memory 18 (EEPROM) for storing external information and an interface 20.

The control unit 12 can transmit and receive data from an external host system via the interface 20.

Memory 14 stores a control program for read and write operations for the data memory 18.

When the IC card is operating normally, data memory 18 is divided into multiple sectors A, B, C, ...., each dedicated to its respective operational purpose. The host system can access (read from or write to) each sector according to an operational purpose. In Figure 2, the letters AAA, BBB, CCC, ... indicate the start address of the respective sectors A, B, and C.

As shown in Figure 3, control memory 14 includes control program storage area 14a and sector information as initialisation information storage area 14b. The sector information includes area name area 14b-1, start address area 14b-2, storage capacity area 14b-3, and other set information area 14b-4.

The sector information and control program for the IC card 10, is incorporated in the control memory 14 at the time of production by making the whole of memory 14 as a mask program.

Accordingly this invention is very convenient when issuing a large number of IC cards each having the same set format.

Thus the embodiment of the invention described above provides an IC card or the like, which can store and read out information without a special initialising process for the data memory. Therefore, when issuing a large number of IC cards for which the initialisation process is exactly the same, there is no need to repeat the same initialisation process.

Figure 4 shows the structure of a control memory of an another embodiment of this invention. In this embodiment, control memory 14 stores an initialisation program to execute the initialising of the data memory 18. The CPU 14 executes initialising of the data memory 18 according to the initialisation program in response to an external supplied command.

In this way the actual program logic is embodied in memory 14 together with the required data for initialisation so that when a simple command is supplied from outside the card, the initialisation process takes place automatically.

## Claims

1. A portable data storage device comprising:

data memory means for storing external information; memory control means for storing external information which indicates addresses of multiple sectors of the data memory and which is stored during the production process of the portable data storage device; control means for writing the external information into the data memory means in accordance with the initialisation information.

2. A portable data storage device comprising:

data memory means for storing external information; control memory means for storing initialisation information which indicates addresses of multiple sectors of the data memory and which is stored during the production process of the portable data storage device; and initialisation means for initialising the data memory means according to the initialisation information.

3. A portable data device according to any preceding claim in which the control memory is formed as a mask program.

**Fig.1.**

**Fig.2.**

**Fig.3.**

**Fig.4.**